# EUROPÄISCHE PATENTANMELDUNG

(11) **EP 0 620 425 A1**
(43) Veröffentlichungstag der Anmeldung: **19.10.1994**
(21) Anmeldenummer: 94105681.4
(22) Anmeldetag: 13.04.1994
(51) Int. Cl.: G01K 15/00, G01K 7/18

(54) **Verfahren zur Erhöhung der Messgenauigkeit von Widerstandsthermometern**

(30) Priorität: 16.04.1993 DE 4312395
(71) Anmelder: GSF - Forschungszentrum für Umwelt und Gesundheit, GmbH, D-85758 Oberschleissheim (DE)
(72) Erfinder: Schmidt, Karl-Heinz, D-83620 Feldkirchen-Westerham (DE)

(57) **Zusammenfassung**

Die Erfindung betrifft ein Verfahren zur Erhöhung der Meßgenauigkeit von Widerstandsthermometern.

Die Erfindung hat die Aufgabe das Meßverfahren so auszugestalten, daß die Verfälschung der Temperatur durch die Eigenerwärmung des Sensors kompensiert wird.

Diese Aufgabe wird dadurch gelöst, daß die Temperatur bei mindestens zwei verschiedenen, durch den Meßvorgang im Sensor freigesetzten elektrischen Leistungen bestimmt und dann auf den Wert bei der elektrische Leistung Null extrapoliert wird.

## Beschreibung

Die Erfindung betrifft ein Verfahren zur Erhöhung der Meßgenauigkeit von Widerstandsthermometern.

Bei den gängigen Temperaturmeßverfahren, bei denen die zu messende Temperatur auf eine Spannungs bzw. auf eine Widerstandsmessung zurückgeführt werden, haben Thermoelemente und Widerstandsthermometer weite Verbreitung gefunden.

Das Problem, das bei den Thermoelementen auftritt, ist das der Thermospannungen, die auf dem Wege zum Meßverstärker das Meßsignal verfälschen.

Bei den Widerstandsthermometern hat man es prinzipiell zwar auch mit störenden Thermospannungen zu tun, die sich jedoch leicht z. B. durch Messung mit Wechselstrom beseitigen lassen.

Ein fundamentales Problem bei der Messung mit Widerstandsthermometern ist jedoch die aus dem Meßstrom resultierende Eigenerwärmung des Widerstandsfühlers. Der Wärmewiderstand zum zu messenden Medium ist immer größer als null. Die daraus resultierende Eigenerwärmung ist kann bei Präzisionsmessungen nicht mehr vernachlässigt werden. Die Eigenerwärmung bei eingekitteten PT 100 Widerstandsmeßfühlern beträgt bei einem Meßstrom von 1mA ca. 0,1 bis 0,3° C.

Ein Verfahren zur Temperaturmessung das oben genannte Nachteile nicht aufweist, ist die Temperaturmessung mit einem Quarzoszillator. Dieses Verfahren vermeidet o. g. Nachteile. Da für den Quarz jedoch immer auch ein Qszillator benötigt wird, ergibt sich ein eingeschränkter Temperaturbereich, zudem ist der Meßkopf wesentlich größer als z. B. ein Thermoelement bzw. ein PT 100 Widerstandsfühler.

Aufgabe der vorliegenden Erfindung ist es, ein Meßverfahren der e.g. Art so auszugestalten, daß die Verfälschung durch die Eigenerwärmung kompensiert wird.

Diese Aufgabe wird duch den Patentanspruch 1 gelöst.

Die Unteransprüche beschreiben vorteilhafte Ausgestaltungen des Verfahrens.

Anhand eines Ausführungsbeispiels wird dieses Verfahren im folgenden näher erläutert.

Ein Meßaufbau zur Durchführung des Verfahrens besteht aus einer einstellbaren Stromquelle, aus einem Widerstandsthermometer und aus einem Spannungsmesser. Die Stromquelle und der Spannungsmesser können zur Vereinfachung des Meßablaufs an einen Mikroprozessor angeschlossen werden. Der aus der Stromquelle kommende Strom fließt durch das Widerstandsthermometer. Die dabei abfallende Spannung wird mit dem Spannungsmesser gemessen.

Zuerst wird die Spannung am Widerstandsthermometer beim Strom null gemessen. Dieser Wert wird von allen weiteren gemessenen Spannungen abgezogen. Die Stromstärke wird nun in kleinen, beispielsweise in 0,1 mA Schritten erhöht und bei jedem dieser Schritte werden die dem gemessenen Widerstand entsprechende Temperatur und die vom Sensor bei der Messung aufgenommene elektrische Leistung ermittelt. Bei der Temperaturbestimmung ist darauf zu achten, daß sich die am Widerstandsthermometer gemessene Spannung nicht mehr ändert.

Nach Ermittlung einer genügenden Anzahl von Messwerten im Leistungs-Temperaturdiagramm wird durch diese Punkte eine Ausgleichsgerade gelegt, deren Schnittpunkt mit der Temperaturachse die tatsächliche Temperatur angibt.

## Patentansprüche

1. Verfahren zur Erhöhung der Meßgenauigkeit von Widerstandsthermometern mit folgenden Verfahrensschritten:
a) Messen der Spannung, welche bei Strom null am Widerstandsthermometer anliegt,
b) Messen der Spannungen, welche bei mindesten zwei verschiedenen Stromstärken am Widerstandsthermometer anliegen sowie Korrektur dieser Werte um den unter a) ermittelten Offset-Wert und
c) Extrapolation der Temperatur in einem Temperatur-Leistungsdiagramm auf Leistung null.

2. Verfahren nach Anspruch 1 dadurch gekennzeichnet, daß die Spannungen mindestens bei drei verschiedenen Stromstärken bestimmt werden, dann in einem Temperatur-Leistungsdiagramm eine Ausgleichsgerade durch diese mindestens drei Punkte gelegt wird, deren Schnittpunkt mit der Ordinate die wahre Temperatur darstellt.

3. Verfahren nach Anspruch 1 oder 2, dadurch gekennzeichnet,daß die Stromstärken im mA Bereich liegen.

4. Verfahren nach einem der Ansprüche 1 bis 3, dadurch gekennzeichnet, daß die Stromstärken in 0.1 mA Schritten erhöht werden.
